# EUROPEAN PATENT APPLICATION

(11) **EP 2 960 677 A1**
(43) Date of publication of application: **30.12.2015**
(21) Application number: 13875835.4
(22) Date of filing: 25.02.2013
(51) Int. Cl.: G01V 1/00

(54) **EARTHQUAKE PREDICTION DEVICE**

(71) Applicant: Central Japan Railway Company, Nagoya-shi Aichi 450-6101 (JP)
(72) Inventor: TAYA, Shuichi, Nagoya-shi Aichi 450-6101 (JP)
(74) Representative: Seemann & Partner
(86) International application number: PCT/JP2013/054758
(87) International publication number: WO 2014/128964

(57) **Abstract**

An earthquake prediction device comprises a predicted value calculation unit that calculates, from a prediction formula, a predicted value (MMIvp) indicating a predicted intensity of a ground motion on the Modified Mercalli Intensity scale, using a maximum velocity value (Vumax), which is the largest among absolute values of velocity component calculated by a vertical velocity calculation unit, after a sensor starts detecting the ground motion caused by an earthquake. The prediction formula is: MMIvp=αvlo_{g1}0(Vumax)+βv.

## Description

### TECHNICAL FIELD

The present invention relates to an earthquake prediction device that predicts an intensity of earthquake shaking at the time of initial tremor of the ground motion, using the Modified Mercalli Intensity scale as a ground motion index indicating the intensity of earthquake shaking.

### BACKGROUND ART

Presently, a device is known that measures the intensity of earthquake shaking in real time (Patent Document 1).
This device detects acceleration components of the ground motion in three directions (vertical, east-west, and north-south), calculates an acceleration by vector-synthesizing these acceleration components, and calculates an index value indicating the intensity of earthquake shaking from this acceleration, to thereby measure the intensity of earthquake shaking in real time.

In addition, presently, a device is also known that predicts the intensity of earthquake shaking at the time of initial tremor of the ground motion (Patent Document 2).

Among the above-described acceleration components of the ground motion in the three directions, the vertical acceleration component has properties of getting larger than the other acceleration components.

Thus, this device predicts the intensity of earthquake shaking by detecting the vertical acceleration component of the ground motion and calculating the index value indicating the intensity of earthquake shaking corresponding to this acceleration component.

In the meantime, the inventions set forth in the above-described Patent Documents 1 and 2 have been created in Japan, and thus, a seismic intensity scale defined by the Japan Meteorological Agency is adopted as the ground motion index in the both inventions.

However, the Modified Mercalli Intensity (MMI) scale is internationally used as the ground motion index, and thus, the devices set forth in the above-described Patent Documents 1 and 2 cannot be used abroad as they are.

Therefore, when the respective devices set forth in the above-described Patent Documents 1 and 2 are used abroad, it is one option to replace, as the ground motion index, the seismic intensity scale defined by the Japan Meteorological Agency with the MMI scale. However, the MMI scale is a ground motion index determined on the basis of human bodily sensation or investigations of the damage situation after the earthquake, and thus, the MMI scale is hardly suited to instrumental measurement, and such replacement is not easy.

Nevertheless, some proposals for using the MMI scale in instrumental measurement have been made.

For example, Wald et al. have proposed a method for estimating the index value on the MMI scale from the acceleration or the velocity of the ground motion (Non-patent Document 1) and, in Japan too, Nakamura has proposed a method for actually measuring the intensity of earthquake shaking using the MMI scale as the ground motion index (Non-patent Document 2).

### PRIOR ART DOCUMENTS

### PATENT DOCUMENTS

Patent Document 1: Publication of Japanese Patent No. 4472769
Patent Document 2: Japanese Unexamined Patent Application Publication No. 2009-068899

### NON-PATENT DOCUMENTS

Non-patent Document 1: "Relationships between Peak Ground Acceleration, Peak Ground Velocity, and Modified Mercalli Intensity in California" David J. Wald, Vincent Quitoriano, Thomas H. Heaton, and Hiroo Kanamori, Earthquake Spectra, Vol. 15, No. 3, Aug. 1999
Non-patent Document 2: "Examination of Rational Ground Motion Index Value - Relationship between Ground Motion Indices based on DI Value" Yutaka Nakamura, 2003, Collection of Earthquake Engineering Papers by Japan Society of Civil Engineers

### SUMMARY OF THE INVENTION

### PROBLEMS TO BE SOLVED BY THE INVENTION

However, none of the proposals have yet led to prediction of the intensity of earthquake shaking, although the MMI scale is used as the ground motion index in the proposals.

On the other hand, it is considered that the degree of damage caused by an earthquake to a structure having a relatively long natural period, such as an earth structure like an embankment and a wooden building, correlates highly with velocity of the ground motion.

Thus, in the railway or the like, in which a lot of earth structures such as embankments are used, when performing an early prediction of occurrence of an earthquake with the intensity that requires caution, it is desired that velocity of the ground motion is taken into consideration. However, whether such a prediction is possible is uncertain.

Thus, in an earthquake prediction device according to one aspect of the present invention, the MMI scale is used as the ground motion index, and the intensity of earthquake shaking is predicted early at the time of initial tremor of the ground motion, taking velocity of the ground motion into consideration.

### MEANS FOR SOLVING THE PROBLEMS

An earthquake prediction device according to a first aspect of the present invention comprises a vertical acceleration acquisition unit (10, S10), a vertical velocity calculation unit (12, S14), and a predicted value calculation unit (16, S14).

The vertical acceleration acquisition unit (10, S10) sequentially acquires vertical acceleration information indicating a vertical acceleration component of a ground motion from a sensor that detects the ground motion, when the sensor starts detecting the ground motion.

The vertical velocity calculation unit (12, S14) sequentially calculates vertical velocity component of the ground motion from the vertical acceleration information acquired by the vertical acceleration acquisition unit.

The predicted value calculation unit (16, S14) calculates a predicted value (MMIvp) indicating an intensity of earthquake shaking by an index value on the Modified Mercalli Intensity scale, using a maximum absolute value among absolute values of the velocity component sequentially calculated by the vertical velocity calculation unit as a maximum velocity value (Vumax), using a prediction formula below.

The prediction formula is: MMIvp=αvlog₁₀(Vumax)+βv.

In the formula, αv and βv are regression coefficients calculated in advance by regression analysis using a maximum absolute value among absolute values of vertical velocity component of the ground motion of each of a plurality of earthquakes that occurred in the past as an explanatory variable (X) and using an index value indicating each intensity of earthquake shaking on the Modified Mercalli Intensity scale as a dependent variable (Y).

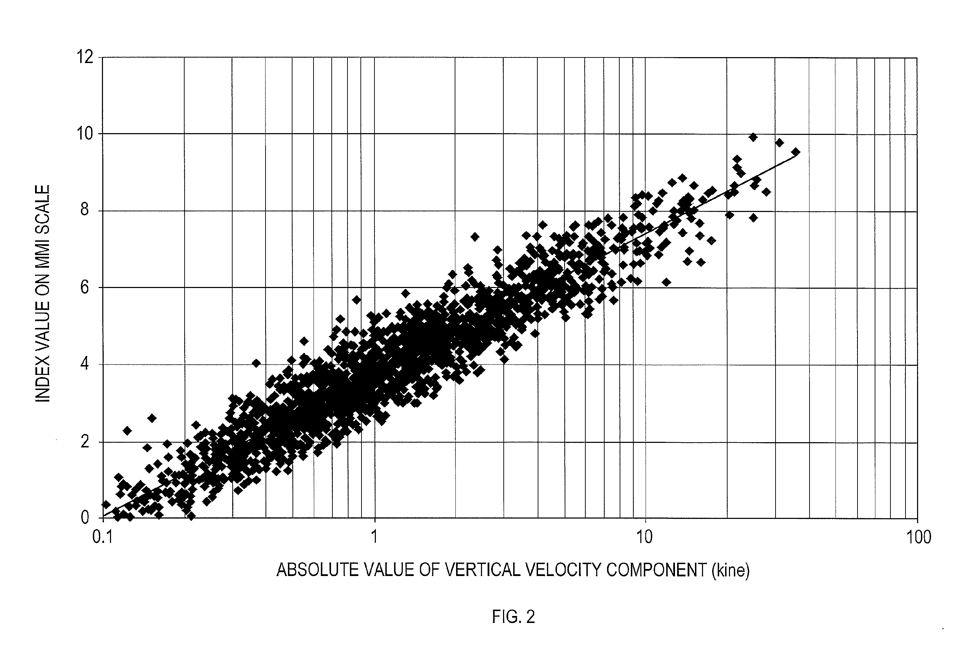

For example, when the regression analysis is performed using the K-NET as a database in which the earthquakes that occurred in the past are recorded (see FIG. 2), Y=3.67log₁₀X+3.72 is obtained. Thus, in the above prediction formula, αv may be set at 3.67, and βv may be set at 3.72.

According to a proposal in Non-patent Document 1 by Wald et al., when a maximum absolute value among absolute values of velocity of the ground motion is referred to as Vmax, a calculated value (MMIv) indicating an intensity of the earthquake shaking on the Modified Mercalli Intensity scale can be obtained by using a calculation formula below.

The calculation formula: MMIv=αlog₁₀(Vmax)+β

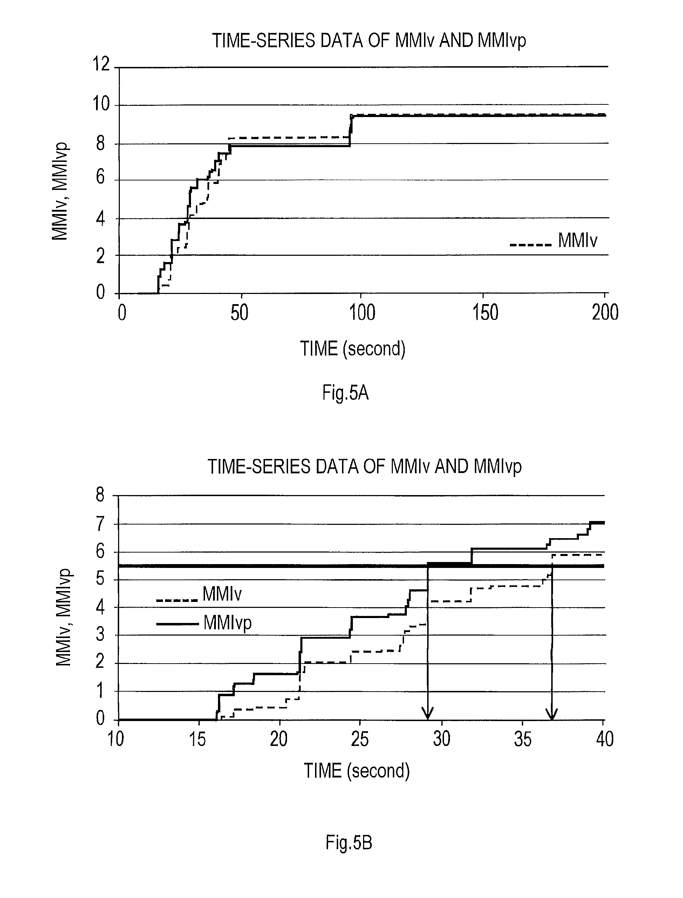

In this calculation formula, α is 3.47, and β is 2.35.
When the predicted value (MMIvp) and the calculated value (MMIv) respectively derived from the prediction formula and the calculation formula are compared with each other, as shown in FIG. 5B, it has been found that, at the time of initial tremor of the earthquake, the predicted value (MMIvp) increases earlier than the calculated value (MMIv).

Accordingly, with the earthquake prediction device of the present invention, the intensity of earthquake shaking can be predicted early at the time of initial tremor of the earthquake by using the MMI scale as the ground motion index.

Moreover, the earthquake prediction device of the present invention predicts the intensity of the earthquake shaking taking velocity of the ground motion into consideration.

Thus, the earthquake prediction device of the present invention is most suitable as a device for predicting a ground motion in the railway or the like having a lot of earth structures such as embankments, for example.

Accordingly, the earthquake prediction device of the present invention enables reduction of accidents, such as a rollover of a train due to collapse of embankments or the like, by stopping the train early using an automatic train stop device at occurrence of an earthquake.

Furthermore, in the earthquake prediction device of the present invention, prediction of an earthquake that is easy to understand globally is possible because the MMI scale is used as the ground motion index.

Next, in the earthquake prediction device according to a second aspect of the present invention, in addition to the configuration of the earthquake prediction device according to the first aspect, an adjustment factor setting unit (22) that adjusts an adjustment factor (γv) may be provided, and a prediction formula below, in which the adjustment factor (γv) is added, may be used as a prediction formula.

The prediction formula is: MMIvp=αvlog₁₀(Vumax)+βv+γv.

When the intensity of earthquake shaking is predicted and a warning thereabout is issued using the earthquake prediction device of the present invention, following two demands from users are expected, for example.

One demand expected is that a warning be issued in every case when occurrence of an earthquake causing a destructive shaking that requires caution is predicted even if there are some cases in which the prediction turns out to be incorrect, regardless of whether an earthquake causing a destructive shaking that requires caution is actually occurring. In this case, increase in the warning success rate is desired.

The other demand expected is that a warning not be issued when an earthquake causing a destructive shaking that requires caution is not occurring even if there are some cases in which no warning is issued when an earthquake causing a destructive shaking that requires caution is occurring. In this case, decrease in a cry-wolf false warning rate is desired. Here, a cry-wolf false warning means a too sensitive warning issued for a minor shaking.

Thus, in the earthquake prediction device of the present invention, the predicted value (MMIvp) to be calculated is adjusted by adding γv in the prediction formula, and the above two demands can thereby be met.

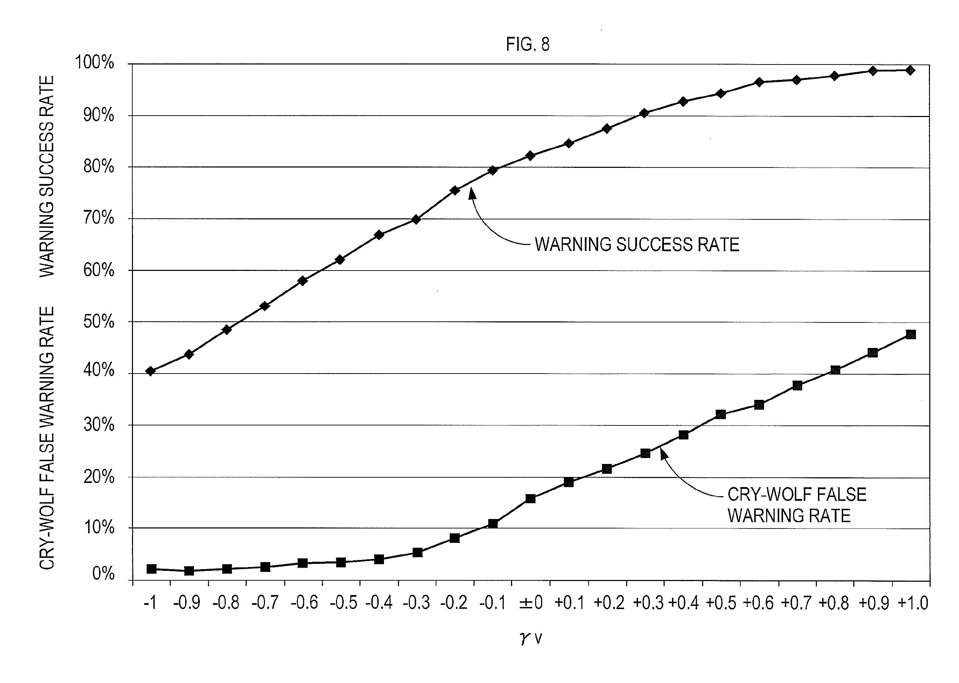

For example, when a warning reference value is set at level 5.5 on the MMI scale and γv is set at -1, the cry-wolf false warning rate is closer to 0%, and in contrast, when γv is set at 1, the warning success rate is closer to 100%, as shown in FIG. 8.

That is, when γv is set at 1, when occurrence of an earthquake causing a destructive shaking that requires caution is predicted, a warning is issued without exception regardless of whether the earthquake causing a destructive shaking that requires caution is actually occurring.

On the other hand, when γv is set at -1, there are some cases in which no warning is issued when an earthquake causing a destructive shaking that requires caution is occurring, whereas no case arises in which a warning is issued when an earthquake causing a destructive shaking that requires caution is not occurring.

Consequently, with the earthquake prediction device of the present invention, a prediction that meets the users' demands is enabled in addition to the effects of the earthquake prediction device according to the first aspect.

Next, in the earthquake prediction device according to a third aspect of the present invention, a warning unit (18, S22-S24) may be provided that compares the predicted value (MMIvp) calculated by the predicted value calculation unit and the warning reference value set in advance with each other and issues a warning when the predicted value (MMIvp) is larger than the warning reference value.

In this earthquake prediction device, the warning is issued only when the predicted value (MMIvp) is larger than the warning reference value set in advance, and thus, a useless warning issued when an earthquake that does not require a warning is occurring can be inhibited.

In the earthquake prediction device according to a fourth aspect of the present invention, an earthquake occurrence determination unit (20) that determines occurrence of an earthquake by presence/absence of the ground motion may be provided, and the warning unit may issue the warning when the earthquake occurrence determination unit determines that the earthquake is occurring.

For information, reference numerals in parentheses after the above units, etc., are each one example indicating corresponding relationships with functional blocks, etc., set forth in embodiments to be described later, and the present invention is not limited to the functional blocks, etc., indicated by the reference numerals in the parentheses after the above respective units.

### BRIEF DESCRIPTION OF THE DRAWINGS

FIG. 1 is a block diagram showing, with blocks, various functions of an earthquake prediction device of a first embodiment.
FIG. 2 is an exponential graph, with the horizontal axis denoting a velocity (unit: kine) and with the vertical axis denoting an index value on the MMI scale, on which a maximum absolute value among absolute values of vertical velocity component of a ground motion of each earthquake that occurred in the past is plotted as an abscissa and an index value indicating each intensity of earthquake shaking on the MMI scale is plotted as an ordinate.
FIG. 3 is a table in which earthquakes that occurred in the past are divided on the basis of whether a calculated value (MMIv) and a predicted value (MMIvp) indicating each intensity of earthquake shaking are each at level 5.5 or larger, and the divided numbers of the earthquakes are indicated.
FIG. 4 is a bar graph in which earthquakes that occurred in the past indicating level 5.5 or larger both in the calculated value (MMIv) and the predicted value (MMIvp) are divided on the basis of a difference between a timing when the predicted value (MMIvp) reached level 5.5 and a timing when the calculated value (MMIv) reached level 5.5, and the divided numbers of the earthquakes are indicated.
FIG. 5A is a graph showing time history changes of the predicted value (MMIvp) and the calculated value (MMIv) from start to end of detection of the ground motion in the 2011 off the Pacific coast of Tohoku Earthquake.
FIG. 5B is a graph showing time history changes of the predicted value (MMIvp) and the calculated value (MMIv) in the 2011 off the Pacific coast of Tohoku Earthquake, which graph shows a section between 10 and 40 seconds of the time in FIG. 5A in an enlarged manner for easy reading of the changes in the values.
FIG. 6 is a flowchart of an earthquake warning process executed by the earthquake prediction device of the first embodiment.
FIG. 7 is a block diagram showing, with blocks, various functions of an earthquake prediction device of a second embodiment.
FIG. 8 is a graph showing a state in which a warning success rate and a cry-wolf false warning rate change when an adjustment factor (γv) is adjusted.
FIG. 9 is a block diagram showing, with blocks, various functions of an earthquake prediction device of another embodiment.
FIG. 10 is a flowchart of an earthquake warning process executed by the earthquake prediction device of the another embodiment.

### EXPLANATION OF REFERENCE NUMERALS

1...earthquake prediction device, 3...acceleration sensor device,
5...external warning device, 10...acceleration acquisition unit,
12...vertical velocity calculation unit, 14...velocity recording unit,
16...predicted value calculation unit, 18...first warning unit,
20...earthquake occurrence determination unit,
20a...flag storage region, 22...adjustment factor setting unit,
24...general earthquake determination unit,
26...second warning unit, 30...vertical acceleration sensor,
32...east-west acceleration sensor,
34...north-south acceleration sensor

### MODE FOR CARRYING OUT THE INVENTION

Embodiments of the present invention will be explained below with reference to the drawings.

### (First Embodiment)

### 1. Earthquake Prediction Device 1

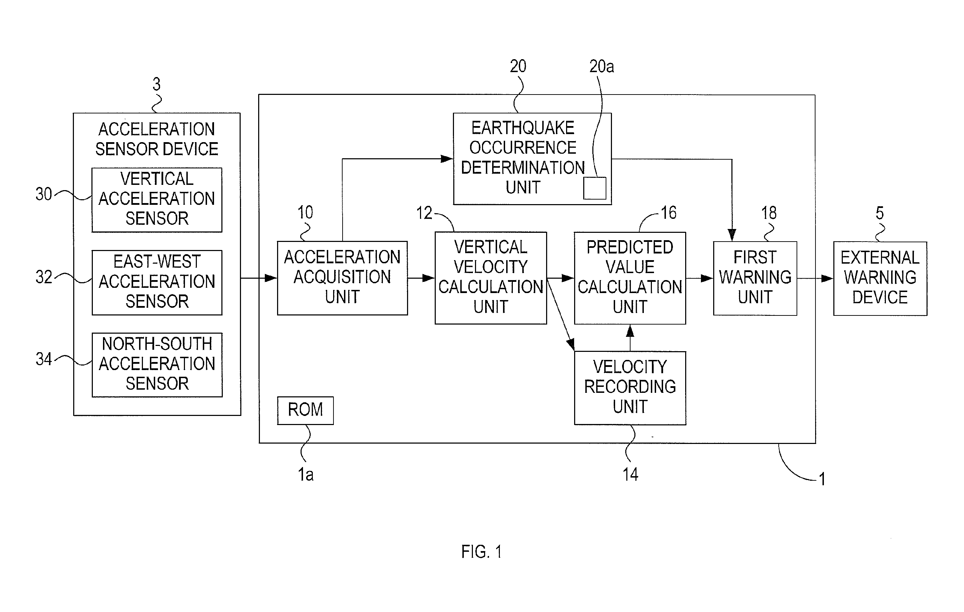

An earthquake prediction device 1 of a first embodiment will be explained with reference to FIG. 1. It is to be noted that the first embodiment will be referred to as the present embodiment in the sections below in which the first embodiment is explained.

The earthquake prediction device 1 of the present embodiment is a computer device including a CPU, a ROM 1a, a RAM, and so on. The CPU and the RAM are not illustrated in FIG. 1.

Connected to the earthquake prediction device 1 are an acceleration sensor device 3 and an external warning device 5.

Among these, the acceleration sensor device 3 comprises three acceleration sensors (a vertical acceleration sensor 30, an east-west acceleration sensor 32, and a north-south acceleration sensor 34) that detect a ground motion as acceleration components in three directions (vertical, east-west, and north-south) orthogonal to each other.

In the present embodiment, observation points are set up in a dispersed manner at areas where occurrence of an earthquake is expected, and the earthquake prediction device 1 and the acceleration sensor device 3 are placed at each of the observation points. When a seismic wave arrives at the observation points, the respective sensors 30 to 34 each start detecting the corresponding acceleration component of the ground motion at each observation point, and the acceleration sensor device 3 starts outputting analog signals indicating the respective acceleration components.

The external warning device 5 is placed in a place apart from the respective observation points, and is connected to a plurality of the earthquake prediction devices 1 placed at the respective observation points, so as to be able to communicate with them via public lines.

Upon receipt of a warning signal from any of the earthquake prediction devices 1, the external warning device 5 performs a warning action such as output of a warning sound and display of warning information.

Further, if the external warning device 5 works in conjunction with, for example, a train control device, upon receipt of the warning signal, the external warning device 5 also can perform a warning action to instruct the train control device to stop trains.

As shown in FIG. 1, the earthquake prediction device 1 comprises an acceleration acquisition unit 10, a vertical velocity calculation unit 12, a velocity recording unit 14, a predicted value calculation unit 16, a first warning unit 18, and an earthquake occurrence determination unit 20.

Functions of these respective units 10 to 20 are fulfilled by the earthquake prediction device 1's execution of an earthquake warning process A stored in the ROM 1 a, which will be described later.

The acceleration acquisition unit 10 sequentially inputs the analog signals indicating the acceleration components in the three directions (vertical, east-west, and north-south) outputted when the respective sensors 30 to 34 in the acceleration sensor device 3 detect the ground motion, and samples these analog signals in each sampling period set in advance.

Then, the acceleration acquisition unit 10 sequentially outputs digital signal generated by sampling the analog signal indicating the vertical acceleration component of the ground motion to the vertical velocity calculation unit 12 and the earthquake occurrence determination unit 20.

Further, the acceleration acquisition unit 10 sequentially outputs digital signals generated by sampling the analog signals indicating the acceleration component in the east-west direction and the acceleration component in the north-south direction to the earthquake occurrence determination unit 20.

In the present embodiment, the sampling period is set at 100 Hz, but is not limited to this. (A configuration may be adopted in which the acceleration acquisition unit 10 is arranged in the acceleration sensor device 3 and the digital signals are transmitted from the acceleration sensor device 3 to the earthquake prediction device 1.)
Each time the vertical velocity calculation unit 12 inputs the digital signal indicating the vertical acceleration component of the ground motion from the acceleration acquisition unit 10 in each sampling period, the vertical velocity calculation unit 12 executes a process for integrating the acceleration component with respect to a sampling time (1/100 seconds) to thereby sequentially calculate a vertical velocity component (unit: kine) of the ground motion.

Then, each time the vertical velocity calculation unit 12 calculates the vertical velocity component of the ground motion, the velocity recording unit 14 executes a process for storing information relating to the velocity component (hereinafter referred to as "vertical velocity information".

Each time the vertical velocity calculation unit 12 calculates the vertical velocity component of the ground motion, the predicted value calculation unit 16 sequentially calculates, on the basis of a prediction formula, which will be described later, a predicted value (MMIvp) indicating the intensity of earthquake shaking on the MMI scale, using a maximum velocity value (Vumax), which is a maximum absolute value among absolute values of the vertical velocity component in the vertical velocity information recorded in the velocity recording unit 14.

When the earthquake occurrence determination unit 20 determines that an earthquake is occurring, the first warning unit 18 outputs the warning signal to the external warning device 5 if the predicted value (MMIvp) calculated by the predicted value calculation unit 16 is determined to be larger than a warning reference value (level 5.5 on the MMI scale) set in advance.

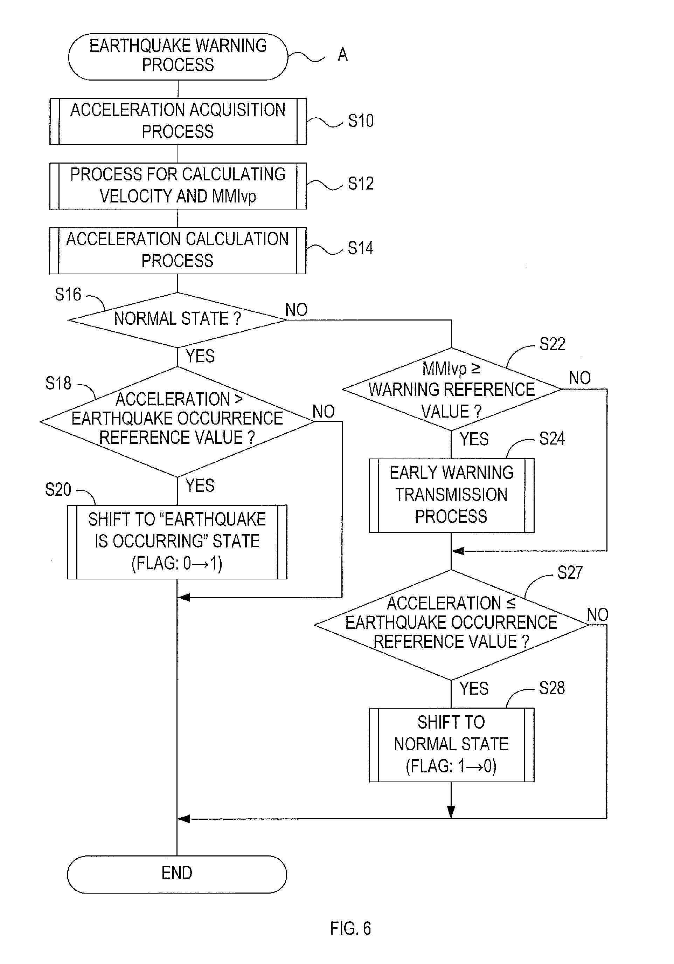

The earthquake occurrence determination unit 20 comprises a flag storage region 20a in which flag information used in the earthquake warning process A (see FIG. 6) to be described later is stored. The flag information indicates whether a ground motion has been detected at the observation point, i.e., whether an earthquake is occurring now.

Each time the earthquake occurrence determination unit 20 inputs the digital signals, in each sampling period, indicating the acceleration components of the ground motion in the orthogonal three directions from the acceleration acquisition unit 10, the earthquake occurrence determination unit 20 calculates the absolute value of the acceleration obtained by vector-synthesizing these acceleration components in the three directions.

Then, if the absolute value of this acceleration is larger than an earthquake occurrence reference value set in advance in order to determine whether an earthquake is occurring, the earthquake occurrence determination unit 20 executes a process for setting the flag information stored in the flag storage region 20a at "1".

In contrast, if the absolute value of this acceleration is equal to or smaller than the earthquake occurrence reference value, the earthquake occurrence determination unit 20 executes a process for setting the flag information stored in the flag storage region 20a at "0". Then, the earthquake occurrence determination unit 20 outputs the flag information stored in the flag storage region 20a to the first warning unit 18.

### 2. Regarding Method of Calculating MMIvp

Next, an explanation will be given of the prediction formula below used in the present embodiment.

The prediction formula: MMIvp=αvlog₁₀(Vumax)+βv

This prediction formula is used to obtain the predicted value (MMIvp) indicating the intensity of earthquake shaking with an index value on the Modified Mercalli Intensity scale.

Vumax is the maximum absolute value among the absolute values of the vertical velocity component of the ground motion stored in the velocity recording unit 14.

As described above, when the vertical acceleration sensor 30 starts detecting the ground motion, the acceleration acquisition unit 10 sequentially inputs the analog signal indicating the vertical acceleration component of the ground motion outputted from the vertical acceleration sensor 30.

Then, the vertical velocity calculation unit 12 sequentially calculates the vertical velocity component of the ground motion, and the calculation results are sequentially stored in the velocity recording unit 14.

Thus, when calculating the predicted value (MMIvp) using the above prediction formula, the predicted value calculation unit 16 acquires the maximum velocity value (Vumax) from the velocity recording unit 14.

On the other hand, αv and βv are coefficient values calculated in advance using waveform data recorded by the K-NET, which is a seismic observation network operated by the National Research Institute for Earth Science and Disaster Prevention.

Regarding 2323 waveform data recorded by the K-NET at 13 earthquakes that occurred in the past, a maximum absolute value (kine) of a vertical velocity component and an index value on the MMI scale for each recorded waveform are obtained, and they are plotted on a semilogarithmic graph with the horizontal axis denoting the maximum value and with the vertical axis denoting the index value. As a result, a relationship as shown in FIG. 2 is obtained.

αv and βv are calculated as regression coefficients by regression analysis using the maximum absolute value of the vertical velocity component in FIG. 2 as an explanatory variable (X) and using the index value on the MMI scale in FIG. 2 as a dependent variable (Y).

When the regression analysis is performed using the data of the ground motions of the earthquakes recorded by the K-NET, the result is Y=3.67log₁₀X+3.72, and thus, αv in the above prediction formula is set at 3.67, and βv is set at 3.72.

It is to be noted that, in order to indicate each intensity of earthquake shaking with the index value on the MMI scale, a calculation formula proposed in Non-patent Document 1 by Wald et al. is used for calculation of the index value (hereinafter referred to as a "calculated value (MMIv)").

The calculation formula: MMIv=αlog₁₀(Vmax)+β

Here, Vmax is an absolute value of a maximum velocity of a ground motion.

Further, α is 3.47, and β is 2.35.

Time history changes of the predicted value (MMIvp) and the calculated value (MMIv) with respect to time have been simulated on the basis of the seismic waveform data recorded by the K-NET, using the above prediction formula and the calculation formula, and the simulation results have been compared with one another. The comparison results will be explained next.

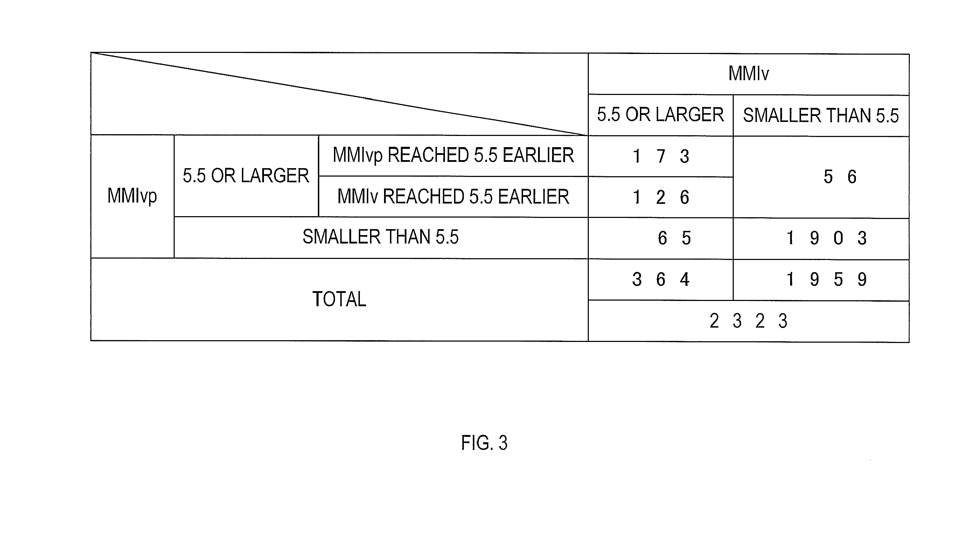

As shown in FIG. 3, among the 2323 cases of the seismic waveform data that have been considered here, the number of cases in which both the predicted value (MMIvp) and the calculated value (MMIv) indicate level 5.5 or larger by the index value on the MMI scale is 299.

Among these, the number of cases in which the predicted value (MMIvp) reached level 5.5 by the index value on the MMI scale earlier than the calculated value (MMIv) in the above simulation is 173, and in contrast, the number of cases in which the calculated value (MMIv) reached level 5.5 earlier is 126.

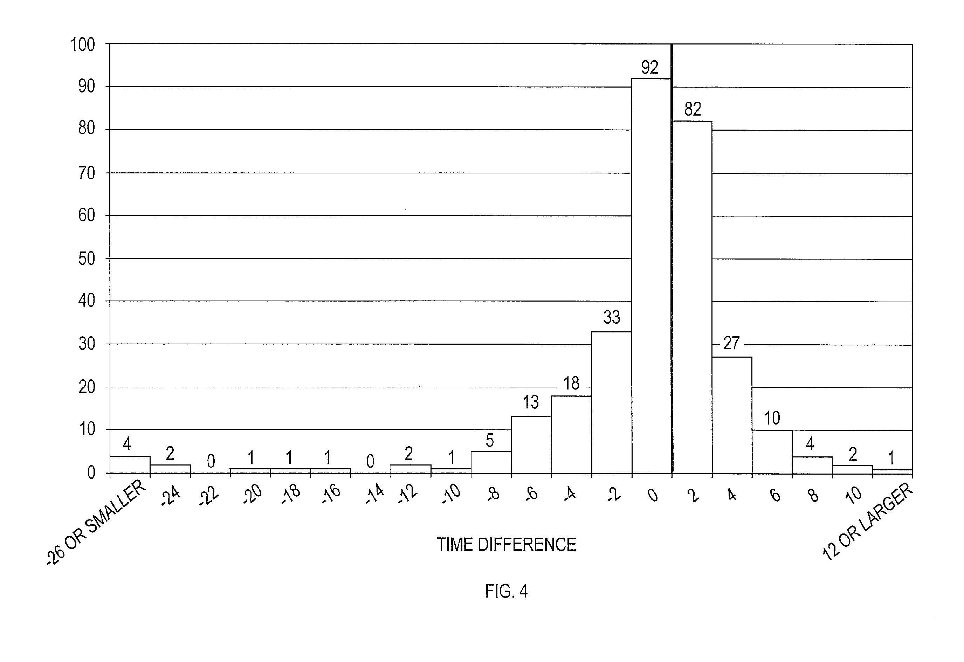

Upon further consideration of the seismic waveform data of the above 299 cases, as shown in FIG. 4, it has been found that the number of the seismic waveform data in which the predicted value (MMIvp) reached level 5.5 by the index value on the MMI scale earlier than the calculated value (MMIv) by a range not less than 0 second and less than 2 seconds is 92, and the like.

It has also been found that, on average, the predicted value (MMIvp) reached level 5.5 on the Modified Mercalli Intensity scale about 4 seconds earlier than the calculated value (MMIv).
Here, when a study is made on the seismic waveform whose predicted value (MMIvp) and calculated value (MMIv) both reach level 5.5 by the index value on the MMI scale and whose maximum seismic intensity is level 9.5 by the index value on the MMI scale in the 2011 off the Pacific coast of Tohoku Earthquake, at an initial stage of the ground motion, the predicted value (MMIvp) reached level 5.5 by the index value on the MMI scale about 8 seconds earlier than the calculated value (MMIv), as shown in FIG. 5B.

On the other hand, even in such an earthquake, after elapse of 100 seconds or longer from occurrence of the earthquake, the predicted value (MMIvp) and the calculated value (MMIv) came to indicate values approximately the same as each other, as shown in FIG. 5A.

That is, the earthquake prediction device 1 of the present embodiment can predict early, at the time of initial tremor of the ground motion, whether a destructive shaking that requires warning will arrive, using the MMI scale as a ground motion index.

### 3. Earthquake Warning Process

Next, an explanation will be given of the earthquake warning process A executed by the earthquake prediction device 1 of the present embodiment with reference to FIG. 6.

The earthquake warning process A of the present embodiment is started when a not-shown power switch of the earthquake prediction device 1 is turned on, and is subsequently executed repeatedly until the power switch is turned off in each sampling period.

In the earthquake warning process A, an acceleration acquisition process of S10 is first executed.
In this S10, the acceleration acquisition unit 10 executes a process for sequentially inputting, from the acceleration sensor device 3, the analog signals indicating the acceleration components of the ground motion in the three directions (east-west, north-south, vertical) detected by the acceleration sensor device 3 and for sampling the inputted analog signals.

Then, in this S10, a process is executed in which the digital signal indicating the sampled vertical acceleration component of the ground motion is outputted to the vertical velocity calculation unit 12 and the earthquake occurrence determination unit 20, and the digital signals indicating the acceleration component in the east-west direction and the acceleration component in the north-south direction are outputted to the earthquake occurrence determination unit 20.

Next, a process for calculating velocity and MMIvp of S12 is executed.

In this S12, the vertical velocity calculation unit 12 executes a process for calculating the vertical velocity component of the ground motion from the vertical acceleration component of the ground motion indicated by the digital signal from the acceleration acquisition unit 10.

Additionally, in this S12, the predicted value calculation unit 16 executes a process for calculating the predicted value (MMIvp) using the maximum velocity value (Vumax), which is the maximum absolute value among the absolute values of the vertical velocity component in the vertical velocity information recorded by the velocity recording unit 14.

Next, in S14, the earthquake occurrence determination unit 20 executes a process for calculating an acceleration of the ground motion at the observation point from the acceleration components of the ground motion in the three directions converted into the digital signals by the acceleration acquisition unit 10.

Next, a process of S16 is executed.

In this S16, a process is executed in which whether an earthquake is occurring is determined.

In this S16, the first warning unit 18 executes a process for, specifically, determining whether the flag stored in the flag storage region 20a is "1" indicating that an earthquake is occurring or "0" indicating a normal state in which no earthquake is occurring.

In this S16, if the flag is determined to be "0", i.e., "normal state", (S16: YES), a process of S18 is executed next. In S16, if the flag is determined to be "1", i.e., "earthquake is occurring" (S16: NO), a process of S22 is executed next.

In S18, a process for determining whether the absolute value of the acceleration of the ground motion at the observation point is larger than the above-described earthquake occurrence reference value is executed.

This S18 is executed by the earthquake occurrence determination unit 20.

In this S18, if the absolute value of the acceleration of the ground motion is larger than the earthquake occurrence reference value, i.e., if an earthquake is occurring (S18: YES), a process for changing the flag stored in the flag storage region 20a from "0" to "1" is executed (S20). Then, the present earthquake warning process A ends, and the processes of and after S10 are executed again.

In contrast, if the absolute value of the acceleration of the ground motion is smaller than the earthquake occurrence reference value, i.e., if no earthquake is occurring (S18: NO), the present earthquake warning process A ends immediately, and the processes of and after S10 are executed again.

Next, an explanation will be given of a process of S22 executed when it is determined in S16 that the flag is "1", i.e., "earthquake is occurring" (S16: NO).

In this S22, the first warning unit 18 executes a process for determining whether the predicted value (MMIvp) calculated in S12 is equal to or larger than the warning reference value, which is a standard for warning, i.e., whether the predicted value (MMIvp) is at level 5.5 or larger on the MMI scale.

If it is determined in this S22 that the predicted value (MMIvp) is larger than the warning reference value, it is found that, as described above, it is 4 seconds on average before occurrence of the shaking of level 5.5 or larger on the MMI scale at the observation point where the earthquake prediction device 1 is placed.

Thus, if it is determined in S22 that the predicted value (MMIvp) is at level 5.5 or larger on the MMI scale (S22: YES), a process of S24 is executed next, where a process for transmitting the warning signal from the first warning unit 18 to the external warning device 5 is executed. Then, after this S24, a process of S27 is executed.

In contrast, if it is determined in S22 that the predicted value (MMIvp) is at level smaller than 5.5 on the MMI scale (S22: NO), a process of S27 is executed next.

In S27, contrary to S18, a process for determining whether the value of the acceleration of the ground motion at the observation point is smaller than the earthquake occurrence reference value set in advance is executed.

This S27 is executed by the earthquake occurrence determination unit 20. In this S27, similarly to S18, a process for determining whether the absolute value of the acceleration of the ground motion at the observation point is equal to or smaller than the above-described earthquake occurrence reference value is executed.

In this S27, if the absolute value of the acceleration of the ground motion is equal to or smaller than the reference value (S27: YES), a process for changing the flag stored in the flag storage region 20a from "1" to "0" is executed (S28). Then, the present earthquake warning process A ends, and the processes of and after S10 are executed again.

In contrast, if the value of the acceleration of the ground motion is larger than the reference value (S27: NO), the present earthquake warning process A ends immediately, and the processes of and after S10 are executed again.

### 4. Characteristic Effects of Earthquake Prediction Device of Present Embodiment

As described above, when the predicted value (MMIvp) of the ground motion of the earthquake that occurred in the past and the calculated value (MMIv) are compared with each other, as shown in FIG. 5B, it has been found that the predicted value (MMIvp) reached the warning reference value earlier than the calculated value (MMIv) at the time of initial tremor of the ground motion.

Consequently, with the earthquake prediction device 1 of the present embodiment, it is possible to predict occurrence of an earthquake that requires warning early at the time of initial tremor of the ground motion using the MMI scale as the ground motion index.

Meanwhile, the earthquake prediction device 1 of the present embodiment predicts the intensity of the earthquake shaking taking velocity of the ground motion into consideration.

Thus, the earthquake prediction device 1 of the present embodiment is most suitable as a device for predicting an earthquake in the railway or the like having a lot of earth structures such as embankments, for example.

That is, if the earthquake prediction device 1 of the present embodiment is used as the device for predicting an earthquake in the railway or the like having a lot of earth structures such as embankments, for example, the earthquake prediction device 1 of the present embodiment enables reduction of accidents, such as a rollover of a train due to collapse of embankments or the like, by stopping the train early using an automatic train stop device at occurrence of an earthquake.

Besides, actions can be taken, such as stopping an elevator and informing people of occurrence of an earthquake via TV or the like.

Moreover, in the earthquake prediction device 1 of the present embodiment, occurrence of an earthquake that requires warning is predicted early using the MMI scale, and thus, prediction of an earthquake that is easy to understand globally is possible.

Furthermore, in the earthquake prediction device 1 of the present embodiment, a warning is issued only when the predicted value (MMIvp) is larger than the earthquake occurrence reference value set in advance (S22 → S24), and thus, a useless warning issued when an earthquake that does not require a warning is occurring can be inhibited.

### (Second Embodiment)

Next, a second embodiment of the present invention will be explained.

In the present embodiment, only differences from the first embodiment will be explained. It is to be noted that the second embodiment is referred to as the present embodiment in the sections below in which the second embodiment is explained.

### 1. Earthquake Prediction Device 1

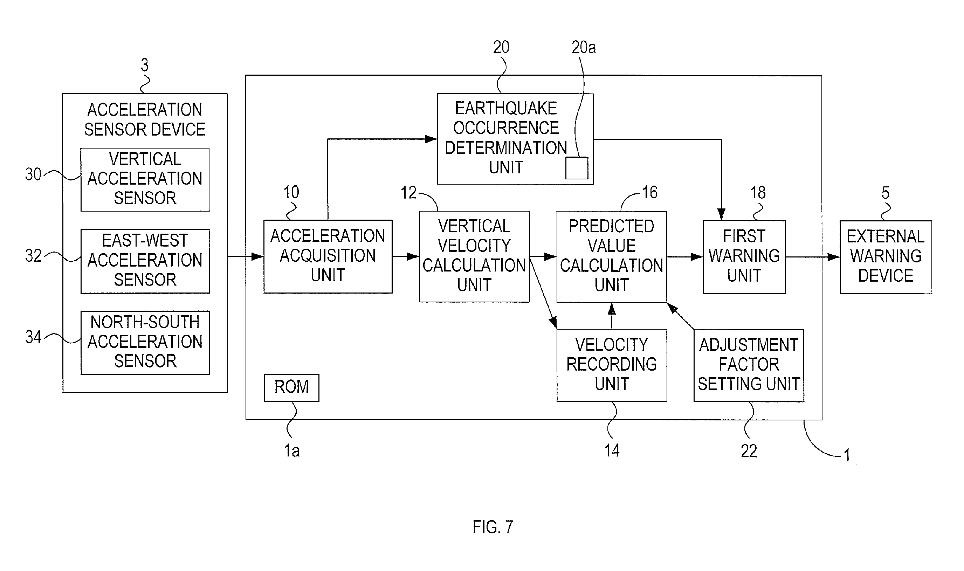

As shown in FIG. 7, the earthquake prediction device 1 of the present embodiment is different from the earthquake prediction device 1 of the first embodiment in that an adjustment factor setting unit 22 is provided.

In addition, the present embodiment is different from the first embodiment in that an adjustment value γv is added to the prediction formula for calculation of the predicted value (MMIvp) to be used by the predicted value calculation unit 16.

The prediction formula: MMIvp=αvlog₁₀(Vumax)+βv+γv

In the present embodiment, γv can be adjusted between -1 and 1. As the adjustment factor setting unit 22, a turn-style adjustment knob is used, for example, with which a value of γv can be adjusted by a manual operation, i.e., by varying a turning amount, etc., of the knob.

The predicted value calculation unit 16 calculates the predicted value (MMIvp) using a value set as the adjustment value γv set by the adjustment factor setting unit 22 and using the prediction formula including such γv.

It is to be noted that the predicted value (MMIvp) is calculated using the above prediction formula including the above-described γv in S22 too, in the earthquake warning process A executed by the earthquake prediction device 1 of the present embodiment.

### 2. Regarding Adjustment Value γv

Next, a warning success rate and a cry-wolf false warning rate will be explained with reference to FIG. 8.
The warning success rate and the cry-wolf false warning rate are calculated using the data of the ground motions of the earthquakes recorded by the K-NET.

The warning success rate is a rate of the earthquakes whose predicted value (MMIvp) is 5.5 or larger among all the earthquakes whose calculated value (MMIv) is 5.5 or larger.

The cry-wolf false warning rate is a rate of the earthquakes whose calculated value (MMIv) is smaller than 5.5 among all the earthquakes whose predicted value (MMIvp) is 5.5 or larger.

As shown in FIG. 8, the warning success rate is higher as γv is closer to 1, and is approximately 100% when γv is set at 1. In contrast, the warning success rate is lower as γv is closer to -1, and is approximately 40% when γv is set at -1.

On the other hand, the cry-wolf false warning rate is lower as γv is closer to -1, and is approximately 0% when γv is set at -1. In contrast, the cry-wolf false warning rate is higher as γv is close to 1, and is approximately 40% when γv is set at 1.

### 3. Characteristic Effects of Earthquake Prediction Device of Present Embodiment

The earthquake prediction device 1 of the present embodiment produces effects below in addition to the effects produced by the earthquake prediction device 1 of the first embodiment.

When occurrence of an earthquake is predicted early and a warning thereabout is issued using the earthquake prediction device 1 of the present embodiment, following two demands from users are expected, for example.

One demand expected is that a warning be issued in every case when occurrence of an earthquake that requires caution is predicted even if there are some cases in which the prediction turns out to be incorrect, regardless of whether the earthquake that requires caution is actually occurring. In this case, increase in the warning success rate is desired.

The other demand expected is that a warning not be issued when an earthquake that requires caution is not occurring even if there are some cases in which no warning is issued when an earthquake that requires caution is occurring. In this case, decrease in the cry-wolf false warning rate is desired.

Thus, in the earthquake prediction device 1 of the present embodiment, the predicted value (MMIvp) to be calculated is adjusted by adding γv in the prediction formula, and the above two demands can thereby be met.

For example, when the warning reference value is set at level 5.5 on the MMI scale and γv is set at -1, the cry-wolf false warning rate is closer to 0%, and in contrast, when γv is set at 1, the warning success rate is closer to 100%, as shown in FIG. 8.

That is, when γv is set at 1, if occurrence of an earthquake that requires caution is predicted, a warning is issued without exception regardless of whether the earthquake that requires caution is actually occurring.

On the other hand, when γv is set at -1, there are some cases in which no warning is issued when an earthquake that requires caution is occurring, whereas no case arises in which a warning is issued when an earthquake that requires caution is not occurring.

Consequently, the earthquake prediction device 1 of the present embodiment enables a prediction that meets the users' demands.

### (Correspondence Relationships)

The information relating to the vertical acceleration component of the ground motion indicated by the analog signal outputted from the vertical acceleration sensor 30 of the above embodiment corresponds to one example of vertical acceleration information of the present invention.

The process executed by the acceleration acquisition unit 10 in the process of S10 in the above embodiment corresponds to one example of a vertical acceleration acquisition unit set forth in the claims.

The process executed by the vertical velocity calculation unit 12 in the process of S14 in the above embodiment corresponds to one example of a vertical velocity calculation unit set forth in the claims.

The process executed by the predicted value calculation unit 16 in the process of S14 in the above embodiment corresponds to one example of a predicted value calculation unit set forth in the claims. The processes in which the first warning unit 18 transmits the warning signal to the external warning device 5 in the processes of S22 to S24 in the above embodiment correspond to one example of a process in which a warning unit issues a warning, which is set forth in the claims.

### (Other Embodiments)

In the above embodiments, the acceleration sensor device 3 has been explained as being a device separate from the earthquake prediction device 1. However, the acceleration sensor device 3 may be incorporated into the earthquake prediction device 1.

In the above embodiments, the external warning device 5 has been explained as a device that can communicate with the earthquake prediction device 1 via public lines. However, the external warning device 5 may be a warning device that is provided to the earthquake prediction device 1 and emits a warning sound.

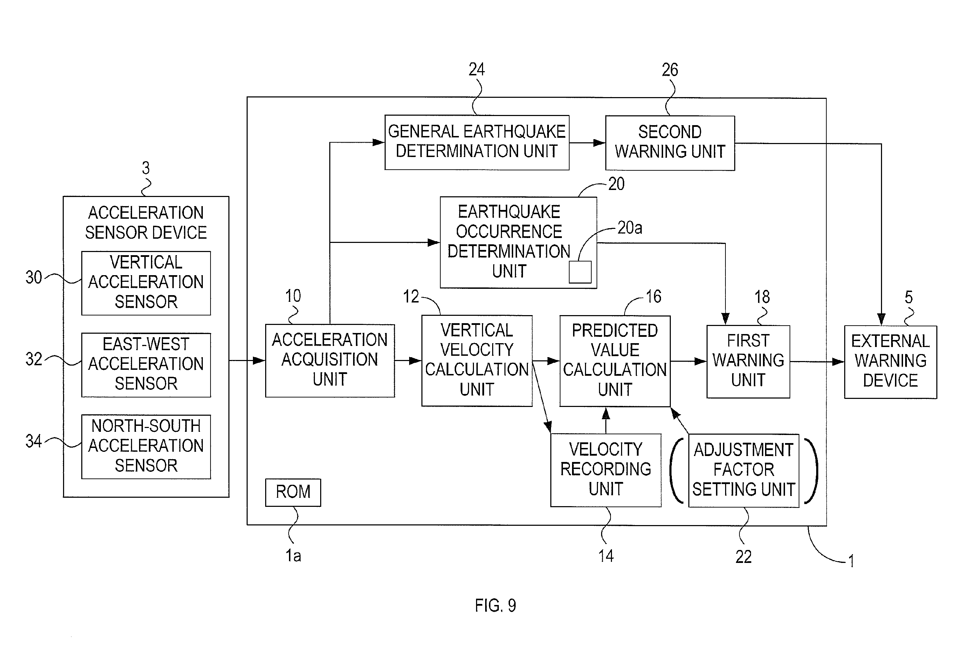

Further, as shown in FIG. 9, the earthquake prediction device 1 may be designed to comprise a general earthquake determination unit 24 that determines an earthquake by a conventional determination method and a second warning unit 26 that issues a warning based on such a determination.

In this case, the second warning unit 26 executes a process for issuing a warning to the external warning device 5 when the general earthquake determination unit 24 determines that an earthquake is occurring.

Thus, in the earthquake prediction device 1 of the present embodiment, the external warning device 5 issues a warning when occurrence of an earthquake is determined by either the first warning unit 18 or the second warning unit 26.

In this case, the adjustment factor setting unit 22 may be or may not be provided.

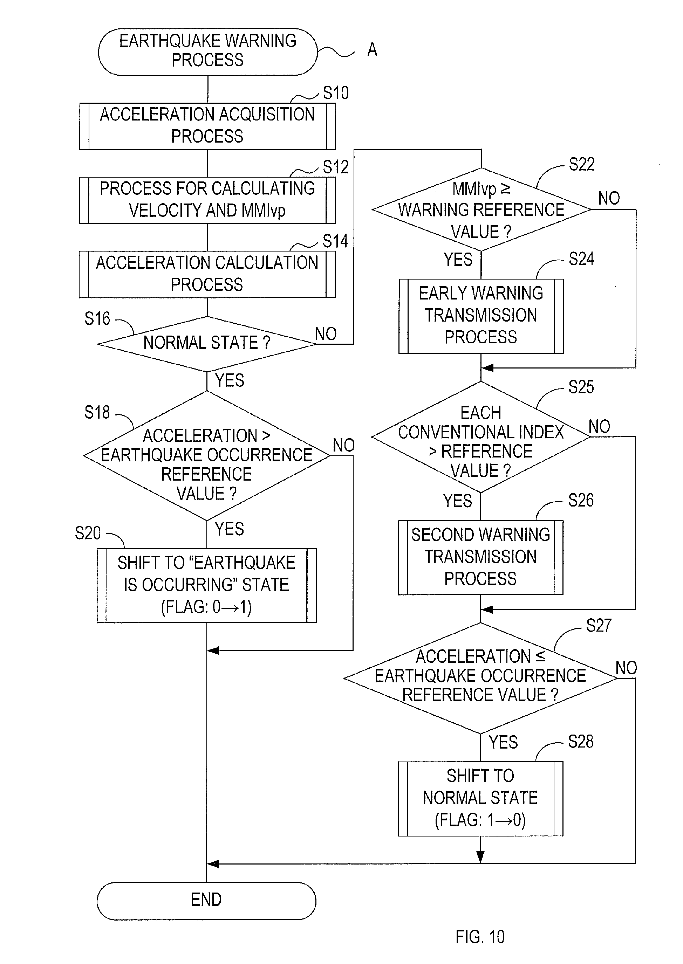

When the general earthquake determination unit 24 and the second warning unit 26 are provided, processes of S25 and S26 may be executed between the processes of S24 and S27, as shown in FIG. 10.

In this case, in S25, it is determined whether an earthquake is occurring by a conventional method. If it is determined that an earthquake is occurring (S25: YES), a process for issuing a second warning, which is different from the early warning of the above embodiment, is executed in S26.

The functions 10 to 26 of the respective units constituting the earthquake prediction device 1 of the present embodiment can be fulfilled by a computer to which the acceleration sensor device 3 and the external warning device 5 are connected by using a program stored in the ROM 1a. This program may be used by being loaded to the computer from the ROM 1a or a backup RAM, or may be used by being loaded to the computer via a network.

Alternatively, this program may be used by being recorded on a recording medium of any forms readable by the computer. Such a recording medium includes, for example, a portable semiconductor memory (e.g., a USB memory, a memory card (registered trademark), etc.).

The present invention is only required to be consistent with the gist of the invention set forth in the claims, and is not limited to the above embodiments.

## Claims

1. An earthquake prediction device comprising:
a vertical acceleration acquisition unit (10, S10) that sequentially acquires vertical acceleration information indicating a vertical acceleration component of a ground motion from a sensor that detects the ground motion, when the sensor starts detecting the ground motion;
a vertical velocity calculation unit (12, S12) that sequentially calculates vertical velocity component of the ground motion from the vertical acceleration information acquired by the vertical acceleration acquisition unit; and
a predicted value calculation unit (16, S12) that calculates a predicted value (MMIvp) indicating an intensity of earthquake shaking by an index value on the Modified Mercalli Intensity scale, using a maximum absolute value among absolute values of the velocity component sequentially calculated by the vertical velocity calculation unit as a maximum velocity value (Vumax), using a prediction formula below:
the prediction formula: MMIvp=αvlog₁₀(Vumax)+βv
wherein αv and βv are regression coefficients calculated in advance by regression analysis.

2. The earthquake prediction device according to claim 1, comprising an adjustment factor setting unit (22) that adjusts an adjustment factor (γv),
wherein the predicted value calculation unit calculates the predicted value (MMIvp) using a prediction formula below, in which the adjustment factor (γv) is added:
the prediction formula: MMIvp=αvlog₁₀(Vumax)+βv+γv.

3. The earthquake prediction device according to any one of claims 1 and 2, comprising a warning unit (18, S22-S24) that compares the predicted value (MMIvp) calculated by the predicted value calculation unit and a warning reference value set in advance with each other, and issues a warning when the predicted value (MMIvp) is larger than the warning reference value.

4. The earthquake prediction device according to claim 3, comprising an earthquake occurrence determination unit (20) that determines occurrence of an earthquake by presence/absence of the ground motion,
wherein the warning unit issues the warning when the earthquake occurrence determination unit determines that the earthquake is occurring.
